# EUROPEAN PATENT SPECIFICATION

(11) **EP 2 985 268 B1**
(45) Date of publication and mention of the grant of the patent: **04.10.2017**
(21) Application number: 15186915.3
(22) Date of filing: 24.08.2011
(51) Int. Cl.: C03C 27/12, C08K 3/22, C08K 5/3417, C08L 101/00, C08J 5/18

(54) **INTERLAYER FILM FOR LAMINATED GLASS, AND LAMINATED GLASS**
ZWISCHENSCHICHTFOLIE FÜR LAMINIERTES GLAS UND LAMINIERTES GLAS
FILM DE COUCHE INTERMÉDIAIRE POUR VERRE STRATIFIÉ ET VERRE STRATIFIÉ

(30) Priority: 24.08.2010 JP 2010187433
(43) Date of publication of application: 17.02.2016
(62) Divisional of application: 11819950.4
(73) Proprietor: SEKISUI CHEMICAL CO., LTD., Osaka-shi, Osaka 530-8565 (JP)
(72) Inventor: KITANO, Hirofumi, Kouka-shi, Shiga 528-8585 (JP); FUKATANI, Juichi, Kouka-shi, Shiga 528-8585 (JP); II, Daizou, Kouka-shi, Shiga 528-8585 (JP); OKABAYASHI, Takazumi, Mishima-gun, Osaka 618-0021 (JP); TSUNODA, Ryuta, Kouka-shi, Shiga 528-8585 (JP)
(74) Representative: Ter Meer Steinmeister & Partner

(56) References cited:
- EP-A1- 1 419 999
- EP-A1- 2 471 761
- EP-A1- 2 471 762
- WO-A2-2006/122305

## Description

### TECHNICAL FIELD

The present invention relates to an interlayer film for laminated glass which is used for laminated glass for vehicles, buildings, or the like. More specifically, the present invention relates to an interlayer film for laminated glass which can improve the heat shielding properties of laminated glass; and laminated glass including the interlayer film for laminated glass.

### BACKGROUND ART

Laminated glass is safety glass which, even when broken by impact from the outside, shatters into few flying glass fragments. For this reason, laminated glass is widely used for cars, rail cars, aircrafts, boats and ships, buildings, and the like. The laminated glass is produced by sandwiching an interlayer film for laminated glass between a pair of glass plates. Such laminated glass used for openings of vehicles or buildings is required to have high heat shielding properties.

Infrared rays having a wavelength of 780 nm or more which is longer than the wavelength of visible light have a small amount of energy compared with ultraviolet rays. The infrared rays, however, have a large thermal effect, and are emitted as heat when absorbed by a substance. For this reason, the infrared rays are commonly referred to as heat rays. The laminated glass is required to be sufficiently shielded from the infrared rays so as to have increased heat-shielding properties.

The below-mentioned Patent Document 1 discloses an interlayer film for laminated glass which contains heat shielding particles such as tin-doped indium oxide particles (ITO particles) or antimony-doped tin oxide particles (ATO particles) for effective blocking of the infrared rays (heat rays).

The below-mentioned Patent Document 2 discloses an interlayer film containing near-infrared absorbing coloring matter, an ultraviolet absorbent having a maximum absorption wavelength in the wavelength range of 250 to 400 nm, and an ethylene-vinylacetate copolymer. Examples of the near-infrared absorbing coloring matter include phthalocyanine compounds, naphthalocyanine compounds, aluminum salt compounds, and anthraquinone compounds.

Patent Document 1: WO 01/25162 A1
Patent Document 2: JP H07-178861 A

### SUMMARY OF THE INVENTION

### PROBLEMS TO BE SOLVED BY THE INVENTION

In recent years, a further increase in the heat shielding properties of conventional interlayer films containing ITO particles or ATO particles has been desired. ITO particles or ATO particles, however, do not absorb near infrared rays sufficiently. For this reason, it is difficult to greatly increase the heat shielding properties of laminated glass by simply adding ITO particles or ATO particles into an interlayer film.

It is also difficult to increase the heat shielding properties of laminated glass sufficiently by adding a near-infrared absorbing coloring matter and an ultraviolet absorbent to an interlayer film as described in Patent Document 2.

Laminated glass is also required to have a high visible transmittance as well as a low solar transmittance which is an index of heat shielding properties. That is, laminated glass is required to have a high visible transmittance and high heat shielding properties.

It is, however, very difficult to obtain laminated glass having a sufficiently low solar transmittance and a sufficiently high visible transmittance, with use of a conventional interlayer film as described in Patent Documents 1 and 2.

The present invention aims to provide an interlayer film for laminated glass which enables to produce laminated glass having a low yellow index and excellent heat shielding properties; and laminated glass including the interlayer film for laminated glass.

EP 2 471 762 A1 provides a laminated glass including an interlayer film for a laminated glass, the interlayer film including a heat shielding layer, and an ultraviolet shielding layer, the heat shielding layer includeing a thermoplastic resin, heat shielding particles and at least one component selected from a phthalocyanine compound, a naphthalocyanine compound, and an anthracyanine compound.

EP 2 471 761 A1 provides an interlayer film for laminated glass comprising a thermoplastic resin; a plasticizer; heat insulating particles; and at least one compound selected from the group consisting of a phthalocyanine compound, a naphtalocyanine compound, and an anthracyanine compound.

EP 1 419 999 A1 is directed to an interlayer film for a laminated glass, wherein a laminated glass, produced by interposing the film between two sheets of glass, has an electromagnetic wave shielding performance of 10 dB or less at a frequency of 0.1 to 10 MHz and 2 to 26.5 GHz, a haze of 1.0% or less, a visible light transmittance of 70% or more and a solar radiation transmittance of 85% or less of the visible light transmittance in a wavelength region of 300 nm to 2100 nm.

WO 2006/122305 A2 provides a continuous webs of self supporting adhesive sheet incorporating at least one layer of a polymeric composition such as polyvinyl butyral and comprising at least one area of a non-uniform thickness profile.

### MEANS FOR SOLVING THE PROBLEMS

An aspect of the present invention is an interlayer film for laminated glass as defined in claims 1-6.

The present invention also provides laminated glass comprising: a first member for laminated glass; a second member for laminated glass; and a single-layer interlayer film or a multi-layer interlayer film placed between the first member for laminated glass and the second member for laminated glass, wherein the single-layer interlayer film or the multi-layer interlayer film includes the interlayer film for laminated glass according to claims 1 to 6.

### EFFECT OF THE INVENTION

The interlayer film for laminated glass according to claims 1 to 6 enables to produce laminated glass having a low yellow index and excellent heat shielding properties.

### BRIEF DESCRIPTION OF DRAWINGS

[Fig. 1] Fig. 1 is a partially cutout cross-sectional view illustrating an example of laminated glass including the interlayer film for laminated glass according to one embodiment of the present invention.
[Fig. 2] Fig. 2 is a partially cutout cross-sectional view illustrating a variant example of the laminated glass including the interlayer film for laminated glass according to one embodiment of the present invention.

### MODE(S) FOR CARRYING OUT THE INVENTION

Hereinafter, the present invention will be described in detail.

The interlayer film for laminated glass according to the present invention comprises a thermoplastic resin; heat shielding particles; and a first component that is at least one of a phthalocyanine compound, a naphthalocyanine compound, and an anthracyanine compound, and contains vanadium atom(s). The interlayer film for laminated glass according to the present invention which has the composition as defined in claims 1 to 6, when used to form laminated glass, makes it possible to give a low yellow index and high heat shielding properties to the resulting laminated glass. In terms of further increasing the heat shielding properties, the interlayer film for laminated glass according to the present invention further comprises a second component that is at least one of a phthalocyanine compound, a naphthalocyanine compound, and an anthracyanine compound, and contains copper atom(s).

Use of an interlayer film for laminated glass which contains heat shielding particles (e.g. ITO particles) in some cases has given low heat shielding properties to the laminated glass. For this reason, the use has a problem that obtaining laminated glass that achieves both an even lower solar transmittance and a high visible transmittance is difficult.

The present invention features that the interlayer film for laminated glass comprises a thermoplastic resin, heat shielding particles, and the above specific first component so as to solve such a problem.

The present inventors have found that combination use of heat shielding particles and the above specific first component makes it possible to increase the heat shielding properties of the interlayer film for laminated glass and laminated glass, and to further decrease the yellow index. The present inventors have also found that combination use of the heat shielding particles, the above specific first component, and the above specific second component enable to further increase the heat shielding properties of the interlayer film and the laminated glass. Also, the combination use of heat shielding particles and the above specific first component or the combination use of the heat shielding particles, the above specific first component, and the above specific second component enables to obtain laminated glass which has a low solar transmittance (index of heat shielding properties) and a high visible transmittance. For example, the laminated glass can be made to have a solar transmittance (Ts2500) of 50% or lower at a wavelength of 300 to 2500 nm, and a visible transmittance of 65% or higher. Furthermore, the laminated glass can be made to have a solar transmittance (Ts2500) of 45% or lower, or even a solar transmittance (Ts2500) of 40% or lower, and to have a visible transmittance of 70% or higher.

In the present embodiment, the transparency can also be increased; for example, it is possible to achieve a haze value of 1% or lower, or even 0.5% or lower.

Hereinafter, the materials constituting the above interlayer film will be described in detail.

### (Thermoplastic resin)

The thermoplastic resin included in the interlayer film for laminated glass according to the present invention is not particularly limited. The thermoplastic resin may be a conventionally known thermoplastic resin. One thermoplastic resin may be used alone, or two or more thermoplastic resins may be used in combination.

Examples of the thermoplastic resin include polyvinyl acetal resins, ethylene-vinylacetate copolymer resins, ethylene-acrylic copolymer resins, polyurethane resins, and polyvinyl alcohol resins. Thermoplastic resins other than these may also be used.

The above thermoplastic resin is preferably a polyvinyl acetal resin. Combination use of the polyvinyl acetal resin and a plasticizer further increases the adhesion of the interlayer film for laminated glass according to the present invention to a member for laminated glass or other interlayer films for laminated glass.

The above polyvinyl acetal resin can be produced by, for example, acetalizing a polyvinyl alcohol with an aldehyde. The above polyvinyl alcohol can be produced by, for example, saponifying polyvinyl acetate. The saponification degree of the above polyvinyl alcohol is generally in the range of 80 to 99.8 mol%.

The average polymerization degree of the polyvinyl alcohol is preferably 200 or higher, and more preferably 500 or higher, while the average polymerization degree is preferably 3000 or lower, and more preferably 2500 or lower. If the average polymerization degree is equal to or higher than the above lower limit, the penetration resistance of the laminated glass is further increased. If the average polymerization degree is equal to or lower than the above upper limit, formation of the interlayer film is facilitated.

The carbon number of the acetal group included in the polyvinyl acetal resin is not particularly limited. The aldehyde used in production of the polyvinyl acetal resin is not particularly limited. The carbon number of the acetal group in the polyvinyl acetal resin is preferably 3 or 4. If the carbon number of the acetal group in the polyvinyl acetal resin is 3 or more, the glass transition temperature of the interlayer film is sufficiently decreased.

The aldehyde is not particularly limited. Generally, a C1 to C10 aldehyde can be suitably used as the above aldehyde. Examples of the C1 to C10 aldehyde include propionaldehyde, n-butyraldehyde, isobutyraldehyde, n-valeraldehyde, 2-ethylbutyraldehyde, n-hexylaldehyde, n-octyl aldehyde, n-nonyl aldehyde, n-decyl aldehyde, formaldehyde, acetaldehyde, and benzaldehyde. Particularly, propionaldehyde, n-butyraldehyde, isobutyraldehyde, n-hexylaldehyde, and n-valeraldehyde are preferably used, propionaldehyde, n-butyraldehyde, and isobutyraldehyde are more preferably used, and n-butyraldehyde is still more preferred. One of the aldehydes may be used alone, or two or more of the aldehydes may be used in combination.

The hydroxyl content (amount of hydroxyl groups) of the polyvinyl acetal resin is preferably 15 mol% or higher, and more preferably 18 mol% or higher, while the hydroxyl content is preferably 40 mol% or lower, and more preferably 35 mol% or lower. If the hydroxyl content is equal to or more than the above lower limit, the adhesion of the interlayer film is further increased. If the above hydroxyl content is equal to or lower than the above upper limit, the flexibility of the interlayer film is increased, which allows easy handling of the interlayer film.

The hydroxyl content of the polyvinyl acetal resin is a molar fraction (represented in percentage) determined by dividing the amount of ethylene group having a hydroxyl group bonded thereto by the total amount of the ethylene group in the main chain. The amount of ethylene group having a hydroxyl group bonded thereto can be determined, for example, by measurement in accordance with JIS K 6726 "Testing methods for polyvinyl alcohol".

The acetylation degree (amount of acetyl groups) of the polyvinyl acetal resin is preferably 0.1 mol% or higher, more preferably 0.3 mol% or higher, and still more preferably 0.5 mol% or higher, while the acetylation degree is preferably 30 mol% or lower, more preferably 25 mol% or lower, and still more preferably 20 mol% or lower. If the acetylation degree is equal to or higher than the above lower limit, the compatibility between the polyvinyl acetal resin and the plasticizer may be high. If the acetylation degree is equal to or lower than the above upper limit, the moisture resistance of the interlayer film and the laminated glass may be high.

The acetylation degree is a molar fraction (represented in percentage) determined by subtracting the amount of ethylene group having an acetal group bonded thereto and the amount of ethylene group having a hydroxyl group bonded thereto from the total amount of ethylene group in the main chain, and then dividing the value resulting from the subtraction by the total amount of ethylene group in the main chain. The amount of ethylene group having an acetal group bonded thereto can be determined in accordance with JIS K 6728 "Testing Methods for Polyvinyl Butyral", for example.

The acetalization degree (butyralization degree in the case of a polyvinyl butyral resin) of the polyvinyl acetal resin is preferably 60 mol% or higher, and more preferably 63 mol% or higher, while the acetalization degree is preferably 85 mol% or lower, more preferably 75 mol% or lower, and still more preferably 70 mol% or lower. If the acetalization degree is equal to or higher than the lower limit, the compatibility between the polyvinyl acetal resin and the plasticizer may be high. If the acetalization degree is equal to or lower than the upper limit, the reaction time it takes to produce a polyvinyl acetal resin may be short.

The acetalization degree is a molar fraction (represented in percentage) determined by dividing the amount of ethylene group having an acetal group bonded thereto by the total amount of ethylene group in the main chain.

The acetalization degree is calculated by first measuring the acetylation degree and the hydroxyl content based on JIS K 6728 "Testing Methods for Polyvinyl butyral", calculating the molar fraction from the measured values, and subtracting the acetylation degree and hydroxyl content from 100 mol%.

In the case that the polyvinyl acetal resin is a polyvinyl butyral resin, the acetalization degree (butyralization degree) and the acetylation degree can be calculated from the results obtained by the method in accordance with JIS K 6728 "Testing Methods for Polyvinyl butyral".

### (Plasticizer)

In terms of further increasing the adhesion of the interlayer film, the interlayer film for laminated glass according to the present invention preferably includes a plasticizer. Particularly, the interlayer film preferably contains a plasticizer in the case that thermoplastic resin contained in the interlayer film is a polyvinyl acetal resin.

The plasticizer is not particularly limited, and may be a conventionally known plasticizer. One plasticizer may be used alone, or two or more plasticizers may be used in combination.

Examples of the plasticizer include organic ester plasticizers such as monobasic organic acid esters and polybasic organic acid esters, and phosphoric acid plasticizers such as organic phosphoric acid plasticizers and organic phosphorous acid plasticizers. Particularly, organic ester plasticizers are preferred. The plasticizer is preferably a liquid plasticizer.

Examples of the monobasic organic acid ester include, but not particularly limited to, glycol esters obtained by the reaction between a glycol and a monobasic organic acid, and esters of triethylene glycol or tripropylene glycol and a monobasic organic acid. Examples of the glycol include triethylene glycol, tetraethylene glycol, and tripropylene glycol. Examples of the monobasic organic acid include butyric acid, isobutyric acid, caproic acid, 2-ethylbutyric acid, heptyl acid, n-octylic acid, 2-ethylhexyl acid, n-nonylic acid, and decyl acid.

Examples of the polybasic organic acid esters include, but not particularly limited to, ester compounds of polybasic acids and C4 to C8 linear or branched alcohols. Examples of the polybasic organic acid include adipic acid, sebacic acid, and azelaic acid.

Examples of the organic ester plasticizer include, but not particularly limited to, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctylazelate, dibutylcarbitol adipate, ethylene glycol di-2-ethyl butyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexylcyclohexyl adipate, a mixture of heptyl adipate and nonyl adipate, diisononyl adipate, diisodecyl adipate, heptylnonyl adipate, dibutyl sebacate, oil-modified alkyd sebacate, and a mixture of phosphate and adipate. Organic ester plasticizers other than these may also be used.

Examples of the organic phosphoric acid plasticizer include, but not particularly limited to, tributoxyethyl phosphate, isodecylphenyl phosphate, and triisopropyl phosphate.

The plasticizer preferably includes at least one selected from triethylene glycol di-2-ethylhexanoate (3GO) and triethylene glycol di-2-ethylbutyrate (3GH), and more preferably triethylene glycol di-2-ethylhexanoate.

The amount of the plasticizer is not particularly limited. For each 100 parts by weight of the thermoplastic resin, the amount of the plasticizer is preferably 25 parts by weight or more, and more preferably 30 parts by weight or more, while the amount is preferably 60 parts by weight or less, and more preferably 50 parts by weight or less. If the amount of the plasticizer is equal to or more than the lower limit, the penetration resistance of the laminated glass can be further increased. If the amount of the plasticizer is equal to or less than the upper limit, the transparency of the interlayer film can be further increased.

### (Heat shielding particles)

One kind of heat shielding particles may be used alone, or two or more kinds of heat shielding particles may be used in combination.

Infrared rays having a wavelength of 780 nm or more which is longer than that of visible light have a small amount of energy compared with ultraviolet rays. The infrared rays, however, have a large thermal effect, and are emitted as heat once absorbed by a substance. For this reason, the infrared rays are commonly referred to as heat rays. The use of the heat shielding particles enables to effectively block the infrared rays (heat rays). The term "heat shielding particles" means particles which absorb infrared rays.

The heat shielding particles include antimony-doped tin oxide particles (ATO particles), gallium-doped zinc oxide particles (GZO particles), indium-doped zinc oxide particles (IZO particles), tin-doped indium oxide particles (ITO particles), and tungsten particles particles. For high heat-ray shielding properties, the heat shielding particles are ATO particles, GZO particles, IZO particles, ITO particles, or tungsten particles, and preferably ITO particles. The tungsten particles are preferably cesium-doped tungsten oxide particles.

Particularly, tin-doped indium oxide particles (ITO particles) are preferred because they have high heat-ray shielding properties and are easily available.

The average particle size of the heat shielding particles is preferably 0.01 µm or more, more preferably 0.02 µm or more, while the average particle size is preferably 0.1 µm or less, and more preferably 0.05 µm or less. If the average particle size is equal to or more than the lower limit, the heat-ray shielding properties can be sufficiently increased. If the average particle size is equal to or less than the above upper limit, the dispersibility of the heat shielding particles can be increased.

The above "average particle size" means a volume-average particle size. The average particle size can be measured using a particle size distribution measuring device ("UPA-EX 150" produced by Nikkiso Co., Ltd.) or the like.

The amount of the heat shielding particles is 0.01 wt% or more, preferably 0.1 wt% or more, and more preferably 0.2 wt% or more, while the amount is 3 wt% or less, preferably 1 wt% or less, and more preferably 0.5 wt% or less. If the amount of the heat shielding particles is in the above range of the above lower limit to the upper limit, a further decreased yellow index, sufficiently increased heat shielding properties, a sufficiently decreased solar transmittance (Ts2500), and a sufficiently increased visible transmittance can be achieved. For example, a visible transmittance of 70% or higher can be achieved.

### (First component)

The first component contained in the interlayer film for laminated glass according to the present invention is at least one of a phthalocyanine compound, a naphthalocyanine compound, and an anthracyanine compound, and contains vanadium atom(s). In other words, the first component is at least one of vanadium atom-containing phthalocyanine compound, a vanadium atom-containing naphthalocyanine compound, and vanadium atom-containing anthracyanine compound. The first component is a heat shielding component. For the first component, one of the above compounds may be used alone, or two or more of the compounds may be used in combination.

Combination use of the heat shielding particles and the specific first component enables to sufficiently block the infrared rays (heat rays). Also, the yellow index of the laminated glass can be decreased.

Examples of the first component include phthalocyanine, phthalocyanine derivatives, naphthalocyanine, naphthalocyanine derivatives, anthracyanine, and anthracyanine derivatives. Each of the phthalocyanine compound and the phthalocyanine derivative preferably has a phthalocyanine skeleton. Each of the naphthalocyanine compound and the naphthalocyanine derivative preferably has a naphthalocyanine skeleton. Each of the anthracyanine compound and the anthracyanine derivative preferably has an anthracyanine skeleton.

In terms of further increasing the heat shielding properties of the interlayer film and the laminated glass, the first component is preferably at least one selected from the group consisting of phthalocyanine, phthalocyanine derivatives, naphthalocyanine, and naphthalocyanine derivatives, and is more preferably at least one of phthalocyanine and phthalocyanine derivatives. The first component is more preferably at least one of vanadium atom-containing phthalocyanine and vanadium atom-containing phthalocyanine derivatives. The first component contains vanadium atom(s). The first component preferably contains a vanadium atom as the central metal atom.

The amount of the first component is 0.001 wt% or more, preferably 0.005 wt% or more, and more preferably 0.01 wt% or more, while the amount is 0.1 wt% or less, preferably 0.05 wt% or less, and more preferably 0.03 wt% or less. If the amount of the first component is in the range of the above lower limit to the above upper limit, a further decreased yellow index, sufficiently increased heat shielding properties, a sufficiently decreased solar transmittance (Ts2500), and a sufficiently increased visible transmittance can be achieved. For example, a visible transmittance of 70% or higher can be achieved.

### (Second component)

The interlayer film for laminated glass according to the present invention further comprises a second component that is at least one of a phthalocyanine compound, a naphthalocyanine compound, and an anthracyanine compound, and contains copper atom(s). In other words, the second component is at least one of a copper atom-containing phthalocyanine compound, copper atom-containing naphthalocyanine compound, and copper atom-containing anthracyanine compound. The second component is a heat shielding component. For the second component, one of the above compounds may be used alone, or two or more of the compounds may be used in combination.

Combination use of the heat shielding particles, the specific first component, and the specific second component enables to block the infrared rays (heat rays) more effectively.

Examples of the second component include phthalocyanine, phthalocyanine derivatives, naphthalocyanine, naphthalocyanine derivatives, anthracyanine, and anthracyanine derivatives. Each of the phthalocyanine compound and the phthalocyanine derivative preferably has a phthalocyanine skeleton. Each of the naphthalocyanine compound and the naphthalocyanine derivative preferably has a naphthalocyanine skeleton. Each of the anthracyanine compound and the anthracyanine derivative preferably has an anthracyanine skeleton.

In terms of further increasing the heat shielding properties of the interlayer film and the laminated glass, the second component is preferably at least one selected from the group consisting of phthalocyanine, phthalocyanine derivatives, naphthalocyanine, and naphthalocyanine derivatives, and is more preferably at least one of naphthalocyanine and naphthalocyanine derivatives. The second component is more preferably at least one of copper atom-containing naphthalocyanine and copper atom-containing naphthalocyanine derivatives. The second component contains copper atom(s). The second component preferably contains a copper atom as the central metal atom.

The amount of the second component is 0.0005 wt% or more, preferably 0.001 wt% or more, more preferably 0.005 wt% or more, and particularly preferably 0.01 wt% or more, while the amount is 0.1 wt% or less, preferably 0.05 wt% or less, and more preferably 0.03 wt% or less. If the amount of the second component is in the range of the above lower limit to the above upper limit, sufficiently increased heat shielding properties, a sufficiently decreased solar transmittance (Ts2500), and a sufficiently increased visible transmittance can be achieved. For example, a visible transmittance of 70% or higher can be achieved.

The total amount of the first component and the second component in the interlayer film is not particularly limited. In 100 wt% of the interlayer film, the total amount of the first component and the second component is preferably 0.001 wt% or more, more preferably 0.005 wt% or more, still more preferably 0.01 wt% or more, and particularly preferably 0.02 wt% or more, while the amount is preferably 0.1 wt% or less, more preferably 0.05 wt% or less, and still more preferably 0.04 wt% or less. If the total amount of the first component and the second component is in the range of the above lower limit to the above upper limit, a moderately decreased yellow index, sufficiently increased heat shielding properties, a sufficiently decreased solar transmittance (Ts2500), and a sufficiently increased visible transmittance can be achieved. For example, a visible transmittance of 70% or higher can be achieved.

The interlayer film for laminated glass according to the present invention preferably includes the first component and the second component at a weight ratio (first component:second component) of 0.1:9.9 to 9.9:0.1, more preferably 1:9 to 9:1, particularly preferably 2:8 to 8:2, and most preferably 3:7 to 7:3. If the ratio of the amounts of the first component and the second component is in the above range, the heat shielding properties of the interlayer film and the laminated glass can be further increased. If the amount of the first component is comparatively large and the amount of the second plasticizer is comparatively small, the yellow index of the interlayer film and the laminated glass can be further decreased. If the amount of the first component is comparatively small and the amount of the second component is comparatively large, the heat shielding properties of the interlayer film and the laminated glass can be further increased.

### (Other components)

The interlayer film for laminated glass according to the present invention may optionally contain additives such as a dispersant for the heat shielding particles, an ultraviolet absorbent, an antioxidant, a light stabilizer, a flame retardant, an antistatic agent, a pigment, a dye, an adhesion adjuster, a moisture resistance agent, a fluorescent brightener, and an infrared absorbent. Each of these additives may be used alone, or two or more of these may be used in combination. The interlayer film preferably contains a dispersant for the heat shielding particles. The dispersant increases the dispersibility of the heat shielding particles. The dispersant for the heat shielding particles is preferably a phosphate ester compound. The interlayer film preferably contains an ultraviolet absorbent. The ultraviolet absorbent is preferably a benzotriazol compound. In 100 wt% of the interlayer film, the amount of the ultraviolet absorbent is preferably 0.01 wt% or more, more preferably 0.1 wt% or more, and still more preferably 0.3 wt% or more, while the amount is preferably 1 wt% or less, more preferably 0.9 wt% or less, and still more preferably 0.8 wt% or less.

### (Interlayer film for laminated glass)

The thickness of the interlayer film is not particularly limited. In terms of the practicality and a sufficient increase in the heat shielding properties, the thickness of the interlayer film is preferably 0.1 mm or more, and more preferably 0.25 mm or more, while the thickness is preferably 3 mm or less, and more preferably 1.5 mm or less. If the thickness of the interlayer film is equal to or more than the lower limit, the penetration resistance of the laminated glass tends to increase.

The production method of the interlayer film for laminated glass according to the present invention is not particularly limited. The method for producing the interlayer film can be a conventionally known method. Examples thereof include a method of producing an interlayer film by kneading a thermoplastic resin, heat shielding particles, the first component, and other component(s) added according to need. Since the interlayer film is suitable for continuous production, a production method through extrusion molding is preferred. At the time of obtaining the interlayer film, it is preferable to prepare a dispersion by dispersing the heat shielding particles in a plasticizer, knead the dispersion with other components (preferably thermoplastic resin), and thereby mold the interlayer film. Furthermore, at the time of obtaining the interlayer film, it is preferable to prepare a dispersion by dispersing the heat shielding particles in a dispersant, knead the dispersion with other components (preferably thermoplastic resin), and thereby mold the interlayer film. Use of such dispersions gives favorable dispersibility to the heat shielding particles in the interlayer film, whereby the effect of adding the heat shielding particles can be achieved more evenly in the interlayer film. In terms of achieving even better dispersibility of the first component in the interlayer film and achieving the effect of adding the first component more evenly in the interlayer film, the first component is preferably mixed in the dispersion. In terms of achieving even better dispersibility of the second component in the interlayer film and achieving the effect of adding the second component more evenly in the interlayer film, the second component is preferably mixed in the dispersion.

The method of kneading is not particularly limited. Examples thereof include methods using an extruder, a plastograph, a kneader, a Banbury mixer, or a calendering roll. Particularly, the methods using an extruder are preferred because such methods are suitable for continuous production, and methods using a twin-screw extruder are more preferred.

The interlayer film for laminated glass according to the present invention can be used as a single layer. Two or more of the interlayer films for laminated glass according to the present invention may be laminated to be used as a multi-layer interlayer film. Also, on at least one surface of the interlayer film for laminated glass according to the present invention, other interlayer film(s) for laminated glass may be laminated, so that the interlayer films are used as a multi-layer interlayer film. In this case, other interlayer film(s) may be laminated to one surface of the interlayer film for laminated glass according to the present invention, or other interlayer film(s) may be laminated to both surfaces of the interlayer film for laminated glass according to the present invention. The other interlayer film(s) for laminated glass can be used as, for example, protective layers for the laminated glass. The interlayer film for laminated glass preferably contains a thermoplastic resin, more preferably a polyvinyl acetal resin, preferably contains a plasticizer, and particularly preferably contains a polyvinyl acetal resin and a plasticizer.

The thickness of the other interlayer film(s) is preferably 0.1 mm or more, more preferably 0.2 mm or more, while the thickness is preferably 1 mm or less, and more preferably 0.5 mm or less. If the thickness of the other interlayer film(s) is in the range of the above lower limit to the above upper limit, the thickness of the multi-layer interlayer film may not be too large, and the heat shielding properties of the multi-layer interlayer film and the laminated glass may be further increased.

### (Laminated glass)

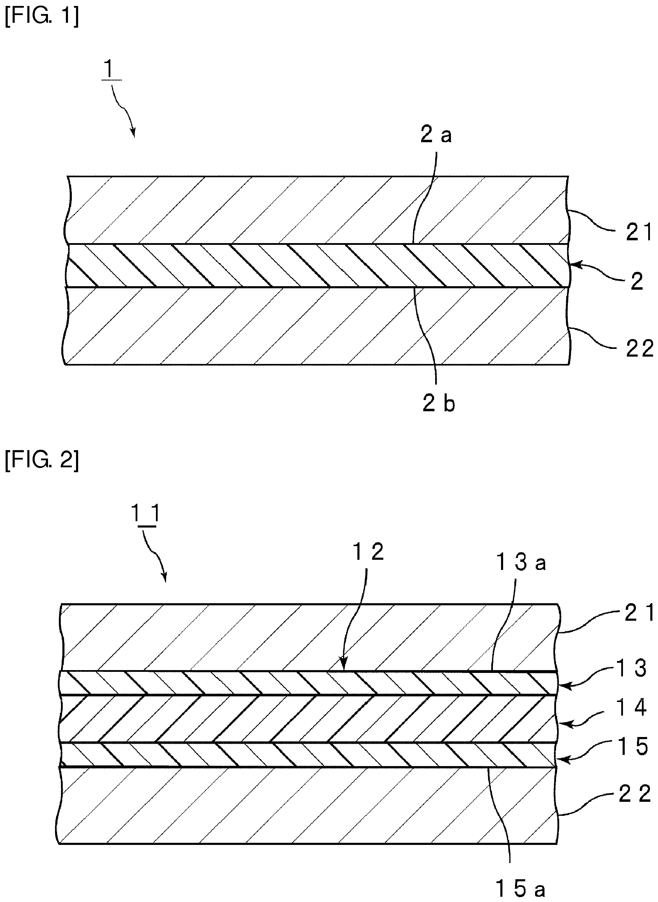

Fig. 1 is a cross-sectional view illustrating an example of laminated glass including the interlayer film for laminated glass according to one embodiment of the present invention.

Laminated glass 1 illustrated in Fig. 1 is provided with an interlayer film 2, a first member for laminated glass 21 and a second member for laminated glass 22. The interlayer film 2 is a single-layer interlayer film. The interlayer film 2 contains a thermoplastic resin, heat shielding particles, the first component, and the second component. The interlayer film 2 is used for obtaining laminated glass. The interlayer film 2 is an interlayer film for laminated glass. The interlayer film 2 does not necessarily contain the second component, but preferably contains the second component.

The interlayer film 2 is sandwiched between the first member for laminated glass 21 and the second member for laminated glass 22. The first member for laminated glass 21 is laminated to a first surface 2a (one surface) of the interlayer film 2. The second member for laminated glass 22 is laminated to a second surface 2b (the other surface) of the interlayer film 2 which is opposite to the first surface 2a.

Fig. 2 is a cross-sectional view illustrating another example of the laminated glass including the interlayer film for laminated glass according to another embodiment of the present invention.

Laminated glass 11 illustrated in Fig. 2 is provided with a multi-layer interlayer film 12, the first member for laminated glass 21 and the second member for laminated glass 22. The multi-layer interlayer film 12 has a structure where three interlayer films of an interlayer film 13, an interlayer film 14, and an interlayer film 15 are laminated in the stated order. The interlayer film 14 is a heat shielding layer, and contains a thermoplastic resin, heat shielding particles, the first component and the second component. The interlayer film 13 and the interlayer film 15 are protective layers, and are the other interlayer films mentioned above. Each of the interlayer film 13 and the interlayer film 15 may be an interlayer film containing a thermoplastic resin, the first component, the second component, and an ultraviolet absorbent. Each of the interlayer film 13 and the interlayer film 15 is used to obtain laminated glass. Each of the interlayer film 13 and the interlayer film 15 is an interlayer film for laminated glass. The interlayer film 14 does not necessarily contain the second component, but preferably contains the second component.

The multi-layer interlayer film 12 is sandwiched between the first member for laminated glass 21 and the second member for laminated glass 22. The first member for laminated glass 21 is laminated to an outer-side surface 13a of the interlayer film 13. The second member for laminated glass 22 is laminated to an outer-side surface 15a of the interlayer film 15.

In this way, the laminated glass of the present invention includes the first member for laminated glass, the second member for laminated glass, and a single-layer interlayer film or a multi-layer interlayer film sandwiched between the first member for laminated glass and the second member for laminated glass, wherein the single-layer interlayer film or the multi-layer interlayer film includes the interlayer film for laminated glass according to the present invention.

The laminated glass of the present invention encompasses not only laminated glass including the interlayer film for laminated glass according to the present invention as a single layer between the first member for laminated glass and the second member for laminated glass, but also laminated glass including a multi-layer interlayer film, formed by laminating two or more of the interlayer films for laminated glass according to the present invention, between the first member for laminated glass and the second member for laminated glass. The laminated glass of the present invention also encompasses laminated glass including, between the first member for laminated glass and the second member for laminated glass, a multi-layer interlayer film that includes the interlayer film for laminated glass according to the present invention and other interlayer film(s) for laminated glass laminated to at least one surface of the interlayer film for laminated glass according to the present invention. In this case, the multi-layer interlayer film to be used may be one including other interlayer film(s) laminated to one surface of the interlayer film for laminated glass according to the present invention, or one including other interlayer film(s) laminated to both surfaces of the interlayer film for laminated glass according to the present invention.

Examples of the first member for laminated glass and the second member for laminated glass include glass plates and PET (polyethylene terephthalate) films. The laminated glass encompasses not only laminated glass including the interlayer film between two glass plates, but also laminated glass including an interlayer film between a glass plate and a PET film or the like. The laminated glass is preferably a laminate including at least one glass plate.

Examples of the glass plate include inorganic glass plates and organic glass plates. Examples of the inorganic glass plates include float plate glass, heat-absorbing plate glass, heat-reflecting plate glass, polished plate glass, molded plate glass, meshed plate glass, wired plate glass, and green glass. The organic glass is synthetic resin glass substituted for inorganic glass. Examples of the organic glass plates include polycarbonate plates and poly(meth)acrylate resin plates. Examples of the poly(meth)acrylate resin plates include polymethyl(meth)acrylate resin plates.

The thickness of each of the members for laminated glass is not particularly limited, and is preferably 1 mm or more. The thickness is preferably 5 mm or less, and more preferably 3 mm or less. In the case that the member for laminated glass is a glass plate, the thickness of the glass plate is preferably 1 mm or more, but is preferably 5 mm or less, and more preferably 3 mm or less. In the case that the member for laminated glass is a PET film, the thickness of the PET film is preferably 0.03 mm or more, but is preferably 0.5 mm or less.

The production method of the laminated glass is not particularly limited. For example, an interlayer film or a multi-layer interlayer film is sandwiched between the first member for laminated glass and the second member for laminated glass, and the resulting product is pressed by a pressing roll or vacuumed under reduced pressure in a rubber bag so that the air remaining between the first member for laminated glass or the second member for laminated glass and the interlayer film or multi-layer interlayer film is removed. Thereafter, the product is preliminarily adhered at about 70°C to 110°C to obtain a laminated product. Next, the laminated product is put in an autoclave or is pressed, and the laminated product is pressure-bonded at about 120°C to 150°C under a pressure of 1 to 1.5 MPa. Thereby, laminated glass can be obtained. The interlayer film and the laminated glass can be used for cars, railcars, aircrafts, boats and ships, and buildings. The interlayer film is preferably an interlayer film for buildings or cars, and more preferably an interlayer film for cars. The laminated glass is preferably laminated glass for buildings or cars, and more preferably an interlayer film for cars. The interlayer film and the laminated glass can also be used for other applications. The interlayer film and the laminated glass can be used for windshields, side glass, rear glass, roof glass, or the like of cars. Since the interlayer film and the laminated glass have a low solar transmittance and a high visible transmittance, the interlayer film and the laminated glass can be used suitably for cars.

The yellow index of the laminated glass is preferably 10 or lower, more preferably 8 or lower, and still more preferably 7 or lower. The yellow index of the laminated glass can be determined based on JIS K 7105. The visible transmittance of the laminated glass is preferably 65% or higher, and more preferably 70% or higher. The visible transmittance of the laminated glass can be determined based on JIS R 3211 (1998). The solar transmittance (Ts2500) of the laminated glass is preferably 65% or lower, more preferably 50% or lower, still more preferably 45% or lower, and particularly preferably 40% or lower. The solar transmittance of laminated glass can be measured in accordance with JIS R 3106 (1998). The haze value of the laminated glass is preferably 1% or lower, more preferably 0.5% or lower, and still more preferably 0.4% or lower. The haze value of the laminated glass can be measured in accordance with JIS K 6714.

The yellow index, the visible transmittance, the solar transmittance, and the haze value are preferably determined using laminated glass obtained by sandwiching the interlayer film for laminated glass according to the present invention between two pieces of 2-mm-thick float glass in accordance with JIS R 3202. That is, in the case that the thickness of the interlayer film for laminated glass according to the present invention is 760 µm, it is preferable that the yellow index, visible transmittance, solar transmittance, and haze value of the laminated glass obtained by sandwiching the 760-µm-thick interlayer film for laminated glass between two pieces of 2-mm-thick float glass satisfy the above respective values.

Hereinafter, the present invention will be described in more detail based on examples. The present invention is not limited to these examples.

The following materials were used in the examples and comparative examples.

Thermoplastic resin:
"PVB" produced by Sekisui Chemical Co., Ltd.
(polyvinyl butyral resin acetalized with n-butyraldehyde, average polymerization degree: 1700, hydroxyl content: 30.5 mol%, acetylation degree: 1 mol%, butyralization degree: 68.5 mol%)

Plasticizer:
3GO (triethylene glycol di-2-ethylhexanoate)

Heat shielding particles:
ITO (ITO particles, Mitsubishi Materials Corporation)

First component:
"EXCOLOR 906" produced by NIPPON SHOKUBAI Co., Ltd.
   (vanadyl phthalocyanine containing a vanadium atom as the central metal atom)
"EXCOLOR 915" produced by NIPPON SHOKUBAI Co., Ltd.
   (vanadyl phthalocyanine containing a vanadium atom as the central metal atom)

Second component:
"IRSORB 203" produced by FUJIFILM Corporation (naphthalocyanine containing a copper atom as the central metal atom)

Ultraviolet shielding agent:
Tinuvin 326 (2-(2'-hydroxy-3'-t-butyl-5-methylphenyl)-5-chlorobenzotriazole, "Tinuvin 326" produced by BASF A.G.)

### (Example 1)(Reference Example)

### (1) Production of interlayer film

Triethylene glycol di-2-ethylhexanoate (3GO) (40 parts by weight), ITO particles (amount corresponding to 0.2 wt% in 100 wt% of the interlayer film to be obtained), and EXCOLOR 906 (amount corresponding to 0.0155 wt% in 100 wt% of the interlayer film to be obtained) were mixed. To the mixture was added a phosphate ester compound which is a dispersant. The resulting mixture was mixed in a horizontal micro-bead mill, so that a dispersion was obtained. The amount of the phosphate ester compound was adjusted to be 1/10 of the amount of the heat shielding particles.

The whole amount of the obtained dispersion was added to 100 parts by weight of a polyvinyl butyral resin (PVB), and the mixture was sufficiently kneaded in a mixing roll. Thereby, a composition was obtained.

The obtained composition was sandwiched with clearance plates (having the same thickness as the interlayer film to be obtained) between two fluororesin sheets, and they were press-molded at 150°C for 30 minutes such that a 760-µm-thick interlayer film was produced.

### (2) Production of laminated glass

The obtained interlayer film was cut into a size of 30 cm in length x 30 cm in width. Next, two transparent float glass plates (30 cm in length x 30 cm in width x 2 mm in thickness) in accordance with JIS R 3202 were prepared. The obtained interlayer film was sandwiched between these two transparent float glass plates. The product was retained in a vacuum laminator for 30 minutes at 90°C and then vacuum pressed, so that a laminate was obtained. The portion of the interlayer film protruding out of the glass plates was cut off, whereby laminated glass was obtained.

### (Reference Examples 2 to 4, Examples 5 to 8 and Comparative Examples 1 to 5)

An interlayer film was produced in the same manner as in Reference Example 1, except that the kinds and amounts of the heat shielding particles, the first component and the second component were changed to those shown in the following Table 1. Using the obtained interlayer film, laminated glass including an interlayer film was produced in the same manner as in Reference Example 1. Also in Reference Examples 2 to 4 and Examples 5 to 8 and Comparative Examples 2 to 4, the amount of the phosphate ester compound was adjusted to be 1/10 of the amount of the heat shielding particles. In Comparative Examples 1 and 5, no phosphate ester compound was used.

### (Evaluations for Reference Examples 1 to 4, Examples 5 to 8 and Comparative Examples 1 to 5)

### (1) Measurement of visible transmittance (A light Y value, initial A-Y (380 to 780 nm))

The visible transmittance of the obtained laminated glass at a wavelength of 380 to 780 nm was measured using a spectrophotometer ("U-4100" produced by Hitachi High-Technologies Corporation) in accordance with JIS R 3211 (1998).

### (2) Measurement of solar transmittance (initial Ts2500 (300 to 2500 nm))

The solar transmittance Ts (Ts2500) of the obtained laminated glass at a wavelength of 300 to 2500 nm was measured using a spectrophotometer ("U-4100" produced by Hitachi High-Technologies Corporation) in accordance with JIS R 3106 (1998).

### (3) Measurement of yellow index (C light YI: yellow index)

The yellow index of the obtained laminated glass was measured using a spectrophotometer ("U-4100" produced by Hitachi High-Technologies Corporation) by a transmission method in accordance with JIS K 7105.

### (4) Measurement of haze value

The haze value of the obtained laminated glass was measured using a haze meter ("TC-HIIIDPK" by Tokyo Denshoku Co., Ltd.) in accordance with JIS K 6714.

The following Table 1 shows the results.

**[Table 1]**

| | Heat shielding particles | | First component | | Second component | | Evaluation | | | |
|---|---|---|---|---|---|---|---|---|---|---|
| | Kind | Amount wt% | Kind | Amount wt% | Kind | Amount wt% | A-Y (%) | Ts2500 (%) | C light YI | Haze value (%) |
| Example 1 | ITO particles | 0.2 | EXCOLOR 906 | 0.0155 | - | - | 71.5 | 39.9 | 0.4 | 0.3 |
| Example 2 | ITO particles | 0.2 | EXCOLOR 915 | 0.021 | - | - | 72.1 | 39.9 | 1.6 | 0.3 |
| Example 3 | ITO particles | 0.4 | EXCOLOR 906 | 0.01 | - | - | 72.7 | 39.4 | 0.9 | 0.4 |
| Example 4 | ITO particles | 0.4 | EXCOLOR 915 | 0.014 | - | - | 73.0 | 39.3 | 1.7 | 0.4 |
| Example 5 | ITO particles | 0.2 | EXCOLOR 906 | 0.01 | IRSORB 203 | 0.002 | 73.2 | 39.9 | 4.4 | 0.3 |
| Example 6 | ITO particles | 0.2 | EXCOLOR 915 | 0.014 | IRSORB 203 | 0.002 | 73.5 | 39.9 | 5.2 | 0.3 |
| Example 7 | ITO particles | 0.4 | EXCOLOR 906 | 0.01 | IRSORB 203 | 0.002 | 72.2 | 37.8 | 5.4 | 0.4 |
| Example 8 | ITO particles | 0.4 | EXCOLOR 915 | 0.014 | IRSORB 203 | 0.002 | 725 | 37.7 | 6.2 | 0.4 |
| Comparative Example 1 | - | - | - | - | - | - | 79.3 | 52.0 | -2.6 | 0.3 |
| Comparative Example 2 | ITO particles | 0.2 | - | - | - | - | 78.1 | 45.1 | -1.3 | 0.3 |
| Comparative Example 3 | ITO particles | 0.4 | - | - | - | - | 77.0 | 42.8 | -0.2 | 0.4 |
| Comparative Example 4 | ITO particles | 0.7 | - | - | - | - | 75.4 | 40.4 | 1.5 | 0.6 |
| Comparative Example 5 | - | - | - | - | IRSORB 203 | 0.023 | 73.3 | 39.8 | 40.9 | 0.3 |

### (Examples 1-4 in Table 1 are Reference Examples)

### (Reference Example 9)

Triethylene glycol di-2-ethylhexanoate (3GO) (40 parts by weight), ITO particles (amount corresponding to 0.20 wt% in 100 wt% of the interlayer film to be obtained), and EXCOLOR 906 (amount corresponding to 0.016 wt% in 100 wt% of the interlayer film to be obtained), Tinuvin 326 (amount corresponding to 0.625 wt% in 100 wt% of the interlayer film to be obtained) were mixed. To the mixture was added a phosphate ester compound as a dispersant. The resulting mixture was mixed in a horizontal micro-bead mill, so that a dispersion was obtained. The amount of the phosphate ester compound was adjusted to be 1/10 of the amount of the heat shielding particles.

The whole amount of the dispersion was added to 100 parts by weight of a polyvinyl butyral resin (PVB), and the mixture was sufficiently kneaded in a mixing roll. Thereby, a composition was obtained.

The obtained composition was extruded using an extruder, and thereby a single-layer interlayer film having a thickness of 760 µm was obtained.

Using the obtained interlayer film, laminated glass including a single-layer interlayer film was obtained in the same manner as in Example 1.

### (Reference Examples 10 to 12)

An interlayer film was produced in the same manner as in Reference Example 9, except that the kinds and amounts of the heat shielding particles and first component were changed to those shown in the following Table 2. Using the obtained interlayer film, an interlayer film was produced in the same manner as in Reference Example 9. Using the obtained interlayer film, laminated glass including the interlayer film was produced in the same manner as in Reference Example 9. Also in Reference Examples 10 to 12, the amount of the phosphate ester compound was adjusted to be 1/10 of the amount of the heat shielding particles. For the interlayer film of each of Reference Examples 10 to 12, Tinuvin 326 was mixed in an amount corresponding to 0.625 wt% in 100 wt% of the interlayer film to be obtained, as in the same manner in Reference Example 9.

### (Evaluations for Reference Examples 9 to 12)

The obtained pieces of laminated glass were evaluated on the evaluation items (1) to (4) which are the same as those in Reference Examples 1 to 4, Examples 5 to 8 and Comparative Examples 1 to 5. The following Table 2 shows the results.

**[Table 2]**

| | Heat shielding particles | | First component | | Second component | | Evaluation | | | |
|---|---|---|---|---|---|---|---|---|---|---|
| | Kind | Amount wt% | Kind | Amount wt% | Kind | Amount wt% | A-Y (%) | Ts2500 | C light YI | Haze value (%) |
| Example 9 | ITO particles | 0.2 | EXCOLOR 906 | 0.016 | - | - | 71.5 | Lower than 40% | 2.7 | 0.3 |
| Example 10 | ITO particles | 0.4 | EXCOLOR 906 | 0.014 | - | - | 71.8 | Lower than 40% | 2.5 | 0.4 |
| Example 11 | ITO particles | 0.2 | EXCOLOR 915 | 0.019 | - | - | 71.9 | Lower than 40% | 4.5 | 0.3 |
| Example 12 | ITO particles | 0.4 | EXCOLOR 915 | 0.017 | - | - | 71.9 | Lower than 40% | 4.2 | 0.4 |

### EXPLANATION OF SYMBOLS

- 1: Laminated glass
- 2: Interlayer film
- 2a: First surface
- 2b: Second surface
- 11: Laminated glass
- 12: Multi-layer interlayer film
- 13 to 15: Interlayer film
- 13a: Outer-side surface
- 15a: Outer-side surface
- 21: First member for laminated glass
- 22: Second member for laminated glass

## Claims

1. An interlayer film for laminated glass, comprising:
a thermoplastic resin;
heat shielding particles;
a first component that is at least one of a phthalocyanine compound, a naphthalocyanine compound, and an anthracyanine compound, and contains vanadium atom(s); and
a second component that is at least one of a phthalocyanine compound, a naphthalocyanine compound, and an anthracyanine compound, and contains copper atom(s),
wherein the heat shielding particles are antimony-doped tin oxide particles, gallium-doped zinc oxide particles, indium-doped zinc oxide particles, tin-doped indium oxide particles or tungsten particles,
the amount of the heat shielding particles is 0.01 wt% or more and 3 wt% or less in 100 wt% of the interlayer film,
the amount of the first component is 0.001 wt% or more and 0.1 wt% or less in 100 wt% of the interlayer film, and
the amount of the second component is 0.0005 wt% or more and 0.1 wt% or less in 100 wt% of the interlayer film.

2. The interlayer film for laminated glass according to claim 1,
wherein the first component is at least one of phthalocyanine and a phthalocyanine derivative, and contains vanadium atom(s).

3. The interlayer film for laminated glass according to claim 1 or 2,
wherein the first component has a structural unit in which a vanadium atom has an oxygen atom bonded thereto.

4. The interlayer film for laminated glass according to any one of claims 1 to 3,
wherein the second component is at least one of naphthalocyanine and a naphthalocyanine derivative, and contains copper atom(s).

5. The interlayer film for laminated glass according to any one of claims 1 to 4,
wherein the thermoplastic resin is a polyvinyl acetal resin.

6. The interlayer film for laminated glass according to any one of claims 1 to 5, further comprising
a plasticizer.

7. Laminated glass comprising:
a first member for laminated glass;
a second member for laminated glass; and
a single-layer interlayer film or a multi-layer interlayer film placed between the first member for laminated glass and the second member for laminated glass,
wherein the single-layer interlayer film or the multi-layer interlayer film includes the interlayer film for laminated glass according to any one of claims 1 to 6.

## Patentansprüche

1. Verbundfolie für laminiertes Glas, umfassend:
ein thermoplastisches Harz;
thermisch abschirmende Partikel;
einen ersten Bestandteil, der zumindest eine von einer Phthalocyanin-Verbindung , einer Naphthalocyanin-Verbindung und einer Anthracyanin-Verbindung darstellt und Vanadiumatom(e) enthält; und
einen zweiten Bestandteil, der zumindest eine von einer Phthalocyanin-Verbindung, einer Napththalocyanin-Verbindung und einer Anthracyanin-Verbindung darstellt und Kupferatom(e) enthält,
wobei die thermisch abschirmenden Partikel Antimon-dotierte Zinnoxidpartikel, Gallium-dotierte Zinkoxidpartikel, Indium-dotierte Zinkoxid Partikel, Zinn-dotierte Indiumoxidpartikel oder Wolframpartikel sind,
der Anteil der thermisch abschirmenden Partikel, bezogen auf 100 Gew% der Verbundfolie, 0,01 Gew% oder mehr und 3 Gew% oder weniger beträgt,
der Anteil des ersten Bestandteils, bezogen auf 100 Gew% der Verbundfolie, 0,001 Gew% oder mehr und 0,1 Gew% oder weniger beträgt,
der Anteil des zweiten Bestandteils, bezogen auf 100 Gew% der Verbundfolie, 0,0005 Gew% oder mehr und 0.1 Gew% oder weniger beträgt,

2. Verbundfolie für laminiertes Glas nach Anspruch 1,
wobei der erste Bestandteil zumindest einer von Phthalocyanin und einem Phthalocyanin-Derivat ist und Vanadiumatom(e) enthält.

3. Verbundfolie für laminiertes Glas nach Anspruch 1 oder 2,
wobei der erste Bestandteil eine Struktureinheit aufweist, bei der ein Vanadiumatom an ein Sauerstoffatom gebunden ist.

4. Verbundfolie für laminiertes Glas nach einem der Ansprüche 1 bis 3,
wobei der zweite Bestandteil zumindest einer von Naphthalocyanin und einem Naphthalocyanin-Derivat ist und Kupferatom(e) enthält.

5. Verbundfolie für laminiertes Glas nach einem der Ansprüche 1 bis 4,
wobei das thermoplastische Harz ein Polyvinylacetalharz ist.

6. Verbundfolie für laminiertes Glas nach einem der Ansprüche 1 bis 5, weiter umfassend einen Weichmacher.

7. Laminiertes Glas umfassend:
ein erstes Element für laminiertes Glas;
ein zweites Element für laminiertes Glas; und
eine einschichtige Verbundfolie oder eine vielschichtige Verbundfolie, die zwischen dem ersten Element für laminiertes Glas und dem zweiten Element für laminiertes Glas angebracht ist,
wobei die einschichtige Verbundfolie oder die vielschichtige Verbundfolie die Verbundfolie für laminiertes Glas nach einem der Ansprüche 1 bis 6 beinhaltet.

## Revendications

1. Un film intercalaire pour verre stratifié comprenant:
une résine thermoplastique;
des particules de protection thermique;
un premier composant qui est au moins l'un d'un composé de phtalocyanine, d'un composé de naphtalocyanine et d'un composé d'anthracyanine, et contient un ou plusieurs atome(s) de vanadium ; et
un second composant qui est au moins l'un parmi un composé de phtalocyanine, un composé de naphtalocyanine et un composé d'anthracyanine, et et contient un ou plusieurs atome(s) de cuivre,
dans lequel les particules de protection thermique sont des particules d'oxyde d'étain dopées par de l'antimoine, des particules d'oxyde de zinc dopées par du gallium, des particules d'oxyde de zinc dopées par de l'indium, des particules de tungstène ou des particules d'oxyde d'indium dopées par de l'étain,
la quantité des particules de protection thermique est de 0,01% en poids ou plus et de 3% en poids ou moins dans 100% en poids du film intercalaire,
la quantité du premier composant est de 0,001% en poids ou plus et de 0,1% en poids ou moins dans 100% en poids du film intercalaire, et
la quantité du second composant est de 0,0005% en poids ou plus et de 0,1% en poids ou moins dans 100% en poids du film intercalaire.

2. Le film intercalaire pour verre stratifié selon la revendication 1,
dans lequel le premier composant est au moins l'un parmi la phtalocyanine et un dérivé de la phtalocyanine, et contient un ou plusieurs atome(s) de vanadium.

3. Le film intercalaire pour verre stratifié selon la revendication 1 ou 2,
dans lequel le premier composant a une unité structurale dans laquelle un atome de vanadium possède un atome d'oxygène lié à celui-ci.

4. Le film intercalaire pour verre stratifié selon l'une quelconque des revendications 1 à 3,
dans lequel le second composant est au moins l'un parmi la naphtalocyanine et un dérivé de la naphtalocyanine, et contient un ou plusieurs atome(s) de cuivre.

5. Le film intercalaire pour verre stratifié selon l'une quelconque des revendications 1 à 4,
dans lequel la résine thermoplastique est une résine de polyvinylacétal.

6. Le film intercalaire pour verre stratifié selon l'une quelconque des revendications 1 à 5, comprenant en outre un plastifiant.

7. Un verre stratifié comprenant:
un premier élément pour verre stratifié;
un second élément pour verre stratifié; et
un film intercalaire à couche unique ou un film intercalaire à plusieurs couches placé entre le premier élément pour verre stratifié et le second élément pour verre stratifié, dans lequel le film intercalaire à couche unique ou le film intercalaire à plusieurs couches comprend le film intercalaire pour verre stratifié selon l'une quelconque des revendications 1 à 6.
